## Europäisches Patentamt

## European Patent Office

## Office européen des brevets

(19)

(11) Veröffentlichungsnummer: **0 114 397**
**B1**

(12)

# EUROPÄISCHE PATENTSCHRIFT

(45) Veröffentlichungstag der Patentschrift:
04.02.87

(21) Anmeldenummer: 83113104.0

(22) Anmeldetag: 24.12.83

(51) Int. Cl.⁴: **A 22 C 13/00**

(54) Aus geraffter schlauchförmiger Hülle bestehender Hohlstab mit Verschlusselement.

(30) Priorität: 31.12.82 DE 3248761

(43) Veröffentlichungstag der Anmeldung:
01.08.84 Patentblatt 84/31

(45) Bekanntmachung des Hinweises auf die Patenterteilung:
04.02.87 Patentblatt 87/6

(84) Benannte Vertragsstaaten:
AT BE CH DE FR GB IT LI LU NL SE

(56) Entgegenhaltungen:
EP-A-0 025 479
BE-A-661 942
DE-A-2 165 191
DE-A-2 719 717
DE-A-3 141 782
FR-A-2 274 224
GB-A-2 070 909
US-A-3 383 222
US-A-3 971 301

(73) Patentinhaber: HOECHST AKTIENGESELLSCHAFT,
Postfach 80 03 20, D-6230 Frankfurt am Main 80
(DE)

(72) Erfinder: Hutschenreuter, Elfriede, Haardtstrasse
116, D-6208 Bad Schwalbach (DE)
Erfinder: Bytzek, Max, Pappelweg 13, D-6200
Wiesbaden- Naurod (DE)
Erfinder: Andrä, Klaus, Dr., Konrad- Adenauer-
Strasse 10, D-6501 Zornheim (DE)
Erfinder: Weinheimer, Alois, Landstrasse 109,
D-6508 Alzey 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen einseitig verschlossenen, aus geraffter schlauchförmiger Hülle bestehenden zylindrischen Hohlstab, auch Raupe genannt, mit einem innerhalb seines Hohlraums, d.h. im Inneren der Raupenbohrung, angeordneten, an der Innenseite des Hohlstabs angrenzenden, ein unregelmäßig gefälteltes, in Richtung der Längsachse des Hohlstabs zusammengepreßtes Schlauchteil umfassenden, integralen, pfropfenartigen Verschlußelement sowie auf Verfahren und Vorrichtung zu seiner Herstellung. Das Verschlußelement wird auch als Endverschluß bezeichnet.

Hohlstäbe dieser Art, die beispielsweise aus Cellulosehydrat bestehen, werden zur Wurstherstellung verwendet. Zum Einfüllen von Wurstbrät in den Hohlstab wird zunächst das Füllrohr der Wurstfüllmaschine in den Hohlraum des Hohlstabes bis zu seinem mit dem Verschlußelement abgedichteten Ende eingeschoben und dann die Wurstmasse durch das Füllrohr in den Hohlraum des Hohlstabes eingepreßt. Durch den Preßdruck der Wurstmasse wird der Hohlstab fortlaufend entrafft. Der dabei entstehende Wurststrang wird durch Abbinden oder Abdrehen in eine Vielzahl einzelner Würste unterteilt.

Die zuerst entstehende Wurst weist an ihrem vorderen Ende das Verschlußelement auf. Sie wird verworfen, da sie normalerweise keine ausreichende Füllmenge enthält. Die in dieser Wurst enthaltene Wurstmasse soll jedoch aus ökonomischen Gründen wiedergewonnen werden; der Endverschluß muß deshalb in der Weise ausgebildet sein, daß er sich von Hand durch Ausstreifen der Wurstmasse leicht öffnen läßt. Andererseits darf sich der Endverschluß durch den auf ihn stoßartig wirkenden Preßdruck der Wurstmasse bei Beginn des Füllvorgangs nicht unbeabsichtigt öffnen.

Hohlstäbe der eingangs genannten Art sind beispielsweise aus der US-A-3,383,222 bekannt. Ein Endabschnitt des Hohlstabs wird hierzu mit einem hakenähnlichen Werkzeug quer zur Längsachse abgezogen. Mit einem ersten Stempel wird das die Öffnung des Hohlstabs überspannende Hüllenmaterial in das Raupeninnere gedrückt, wobei ein angrenzender Teil des Hüllenmaterials entrafft und ebenfalls in den Hohlraum des Hohlstabs eingebracht wird. Als nächstes muß der erste Stempel entfernt werden. Danach wird der im Hohlraum des Hohlstabs eingebrachte Hüllenteil mit einem zweiten Stempel vom entgegengesetzten Ende des Hohlstabs gegen ein Widerlager plattgedrückt, welches vorher an die zu verschließende Öffnung des Hohlstabs herangebracht werden muß.

Dieses Verschlußelement ist kaum in der Lage, höheren Preßdrücken, wie sie in modernen Wurstfüllanlagen angewendet werden, standzuhalten. Es ist außerdem von nicht definierbarer Form, wobei man häufig nicht reproduzierbare Ergebnisse erhält. Es besteht auch Gefahr, daß beim Einführen der beiden Stempel die Innenseite des Hohlstabs versehentlich beschädigt wird. Außerdem ist dieses Verfahren aufgrund der Vielzahl von Einzelschritten und der verschiedenen erforderlichen Vorrichtungsteile relativ aufwendig.

Ausgehend von diesem Stand der Technik liegt der vorliegenden Erfindung die Aufgabe zugrunde, einen mit einem Verschlußelement versehenen Hohlstab der eingangs genannten Art zu schaffen, dessen Verschlußelement seine Verschlußfunktion auch bei hohen Preßdrücken sicher erfüllen kann, das aber auch leicht von Hand durch Ausstreifen der Wurstmasse zu öffnen ist, um eine problemlose Rückgewinnung der darin befindlichen Wurstmasse zu gewährleisten. Das Verschlußelement soll zudem rationell, aus wenig Hüllenmaterial, in wenigen Schritten und mit geringem maschinellem Aufwand herstellbar sein.

Gelöst wird diese Aufgabe durch einen Hohlstab mit den im Anspruch 1 genannten Merkmalen, durch Verfahren mit den Merkmalen der Ansprüche 3 bzw. 5 und durch die Vorrichtung mit den im Anspruch 7 angegebenen Merkmalen. Die Unteransprüche geben vorteilhafte Weiterbildungen an.

Die doppelwandige Ausführung des Verschlußelements, welches aus zwei Schlauchteilen besteht, bewirkt im Zusammenhang mit der speziellen Fältelung des einen Schlauchteils ein leichtes, problemloses und weiches, d.h. materialschonendes, Entfalten des Verschlusses, wenn die Wurstmasse aus der ersten Wurst ausgestrichen wird.

Das Verschlußelement liegt praktisch mit seinem gesamten Umfang an der Innenseite des Hohlstabs an, so daß ein selbständiges Verrutschen nicht möglich ist. Zwischen seinem Umfang und der Hohlstabinnenseite sind auch keine nennenswerte Zwischenräume vorhanden, so daß allenfalls Luft, nicht aber Wurstbrät, zwischen Verschlußelement und Hohlstabinnenseite hindurchtreten kann. Das gefältelte Schlauchteil sorgt für einen sicheren Sitz des Verschlußelementes im Innern des Hohlstabs.

Das Verschlußelement der Erfindung besteht aus einem im wesentlichen zylinderförmigen Pfropfen, der koaxial im Hohlraum des Hohlstabs angeordnet ist und den im Querschnitt kreisförmigen Hohlraum des Hohlstabs am einen Hohlstabende verschließt. Der Pfropfen ist aus zwei Schlauchteilen aufgebaut, die zusammen aus einem einzigen Schlauchstück bestehen. Dieses Schlauchstück ist mit dem Hohlstab aus dicht geraffter Schlauchhülle integral verbunden; es wird zu Beginn der Herstellung des Endverschlusses vom zu verschließenden Hohlstabende abgezogen und dabei entrafft.

Das besagte Schlauchstück ist aus zwei Schlauchteilen aufgebaut. Das eine Schlauchteil verbleibt im entrafften Zustand, d.h. es ist praktisch frei von Raffalten. Das andere Schlauchteil dagegen wird durch längsaxiales Stauchen vom entrafften Zustand in eine neue gefältete Struktur übergeführt, die relativ locker, d.h. unregelmäßig, ist. In dieser Faltenstruktur liegen die Falten des Schlauchmaterials nicht so dicht aneinander an wie die Falten des Hohlstabs, welcher zur ausreichenden Stabilität dicht gerafft ist. Das gefältelte Schlauchteil bildet den größten Teil des Pfropfens und füllt den Innenraum des Hohlstabs praktisch über dessen gesamten kreisförmigen Querschnitt aus.

Beide Schlauchteile erstrecken sich im Hohlraum des Hohlstabs parallel zur Längsachse des Hohlstabs. Sie unterscheiden sich damit wesentlich von einer Reihe von bekannten Formen des Verschlußelementes, bei denen das zum einseitigen Verschließen des Hohlstabs vorgesehene, im Hohlraum des Hohlstabs angeordnete Schlauchstück sich quer zur Hohlstablängsachse erstreckt.

Beide Schlauchteile sind koaxial angeordnet, wobei das eine Schlauchteil das andere umgibt. Es ist nun möglich, daß das gefältelte oder das entraffte Schlauchteil das innere, zentrale Schlauchteil bildet und von dem anderen, äußeren Schlauchteil umgeben wird. Das äußere Schlauchteil liegt an der Innenseite des Hohlstabs an.

Das erfindungsgemäße Verschlußelement kann somit in zwei Ausführungsformen vorliegen.

In einer ersten Ausführungsform ist das Verschlußelement so ausgebildet, daß das an der Innenseite des Hohlstabs anliegende Schlauchteil unter Fältelung gestaucht ist und das andere Schlauchteil, welches koaxial in dem ersten Schlauchteil angeordnet ist, in entrafftem Zustand vorliegt. Das erste, unregelmäßig gefältelte Schlauchteil ist in unmittelbarem Kontakt mit der Innenseite des Hohlstabes, das andere Schlauchteil ist weiter weg von der Innenwand des Hohlstabs und um den Mittelpunkt des kreisförmigen Querschnitts des Hohlstabs angeordnet. In dieser Ausführungsform umschließt das äußere gefältelte Schlauchteil das entraffte Schlauchteil über dessen Länge und grenzt mit seiner Außenseite unmittelbar eng an die Innenseite des Hohlstabs an.

Im Bereich des dem unverschlossenen Ende des Hohlstabs zugewendeten Endes des Endverschlusses geht das entraffte, zentral angeordnete Schlauchteil unter Umbiegung in Richtung zur Innenwand des Hohlstabs und dann in Richtung zum verschlossenen Ende des Hohlstabs integral in das gefältelte Schlauchteil über. Das gefältelte Schlauchteil geht am gegenüberliegenden Ende integral in den Hohlstab über.

Bei dieser Ausführungsform ist der Verschlußpfropfen besonders fest im Inneren des Hohlstabes verankert. Die durch längsaxiales Stauchen des direkt an die Innenwand des Hohlstabes angrenzenden Schlauchstücks bewirkte Fältelung gewährleistet einen besonders formschlüssigen Sitz des Pfropfens an der Faltenstruktur der Hohlstabinnenseite. Die Entfernung des Pfropfens geschieht materialschonend und einfach, da der Verschlußpfropfen nicht als ganzer herausgezogen wird, sondern zu diesem Zweck nur die durch die längsaxiale Stauchung entstandene Fältelung wieder entfältelt werden muß.

In einer bevorzugten, zweiten Ausführungsform ist das Verschlußelement so ausgebildet, daß das entraffte Schlauchteil an der Innenseite des Hohlstabs angrenzt und das andere Schlauchteil, welches in dieser Ausführungsform koaxial in dem äußeren Schlauchteil angeordnet ist, durch längsaxiales Stauchen gekräuselt ist. In der zweiten Ausführungsform umschließt das entraffte, äußere Schlauchteil das gefältelte, innere Schlauchteil über dessen Länge und grenzt mit seiner Außenseite unmittelbar an die Innenseite des Hohlstabs an. Das gefältelte Schlauchteil kann somit mit der Faltenstruktur des Hohlstabs nicht in direkten Kontakt treten, da sich zwischen beiden der entraffte Schlauchteil erstreckt.

Im Bereich des dem unverschlossenen Hohlstabende zugewendeten Endes des Endverschlusses geht das innere gefältelte Schlauchteil unter Umbiegung in Richtung zur Innenwand des Hohlstabs und dann in Richtung zum verschlossenen Ende des Hohlstabs integral in das entraffte, äußere Schlauchteil über. Das entraffte äußere Schlauchteil geht am gegenüberliegenden Ende integral in den Hohlstab über. Diese zweite Ausführungsform ist bevorzugt, da sie die der Anmeldung zugrundeliegende Aufgabe besser lösen kann.

Das offene Ende des den Endverschluß bildenden Schlauchstücks befindet sich in beiden Varianten des Verschlußelements an dem zu verschliessenden Ende des Hohlstabs, zentral im kreisförmigen Querschnitt des Hohlstabhohlraums. Das offene Ende des Schlauchstücks ist somit Teil des gefältelten oder des entrafften Schlauchteils, je nachdem, welches von beiden zentral im Hohlraum des Hohlstabs angeordnet ist. Dieses offene Ende kann gegebenenfalls flachgelegt oder quer zur Raupenachse umgelegt, also gefalzt, oder durch axiales Verdrehen um z.B. 90° bis 270° verdrillt sein.

Die beiden Schlauchteile sind in beiden Ausführungsformen in etwa gleich lang, obwohl selbstverständlich das jeweils gefältelte Schlauchteil ein längeres Stück Schlauchhülle beinhaltet als das entraffte. Allenfalls kann das zentral angeordnete Schlauchteil geringfügig kürzer sein als das äußere Schlauchteil, welches an der Innenwand des Hohlstabs anliegt.

Das Verschlußelement ist in der bevorzugten Ausführungsform im Bereich des hohlkonischen Endes des Hohlstabes angeordnet. Das hohlkonische Ende ist das Ende des Hohlstabes, welches beim Raffen der Schlauchhülle zur Herstellung des Hohlstabes zuerst gebildet wird.

Da die Flächen der Raffalten bei den heute üblichen Raffverfahren gewöhnlich nicht mehr senkrecht zur Längsachse des Hohlstabes stehen, sondern mit ihr einen spitzen Winkel bilden, zeigt der Hohlstab an seinen Enden kegelstumpfartige Flächen. Daher weist die zuerst gebildete Raffalte, am hohlkonischen Ende des Hohlstabes, in Richtung der Längsachse des Hohlstabes gesehen, eine in den Hohlstabhohlraum gerichtete kegelstumpfartige Fläche auf, die beim Einpressen des gefälteten Schlauchteils und/oder des entrafften Schlauchteils gleichsam wie ein Trichter wirkt und das Einführen dieser Schlauchteile erleichtert.

Den Verfahren zur Herstellung des Hohlstabverschlusses ist gemeinsam, daß zunächst ein Stück der Schlauchhülle unter Entraffen an dem zu verschließenden Ende des Hohlstabs abgezogen wird. Das Abziehen erfolgt längsaxial in Richtung der Hohlstablängsachse und zwar entweder vom Hohlstab weg oder in den Hohlraum des Hohlstabs hinein, wobei im letzteren Fall das abgezogene Schlauchstück gleichzeitig gewendet wird. Aus diesen beiden Varianten des Abziehens resultieren die beiden Verfahrensvarianten nach Anspruch 3 bzw. Anspruch 5.

In der einen Verfahrensalternative (Anspruch 5) wird das in das Innere des Hohlstabs eingebrachte entraffte Schlauchstück in Richtung auf das zu verschließende Ende des Hohlstabs gestaucht. Das Schlauchstück wird hierbei an seinem offenen Ende erfaßt und danach durch sich selbst unter erneutem Wenden des Schlauchstücks in Richtung zu dem zu verschließenden Ende des Hohlstabs geführt.

Um das entraffte Schlauchstück im Hohlstabhohlraum in Richtung auf das zu verschließende Ende des Hohlstabs stauchen zu können, ist es zweckmäßig, auf dieses Schlauchstück in der Nähe dieses Endes des Hohlstabes eine Gegenkraft wirken zu lassen, z.B. in Form eines Widerlagers oder Anschlags.

Bei diesem Stauchen entsteht eine unregelmäßige Fältelung oder Kräuselung in dem an die Innenwand des Hohlstabs angedrückten äußeren Schlauchteil des Verschlußelements.

Beim Herausziehen des offenen Endes des Schlauchstücks durch den Innenraum des äußeren gekräuselten Schlauchteils bildet sich dann das zentrale, entraffte Schlauchteil des Verschlußelements.

In der anderen, bevorzugten Variante des Verfahrens (Anspruch 3), bei dem ein Schlauchteil vom zu verschliessenden Hohlstabende weggezogen und dabei entrafft wird, wird das entraffte Schlauchteil in einer auf das zu verschließende Hohlstabende hin gerichteten Bewegung noch außerhalb des Hohlstabs unter Bildung einer gefälteten Struktur längsaxial gestaucht. Die vom Außenumfang des Hohlstabs bis zu seinem Hohlraum sich erstreckende Stirnfläche des Hohlstabs kann als Widerlager für den Stauchvorgang dienen. Es ist auch möglich, im Bereich der Stirnfläche ein Element, z.B. in Form eines Ringkörpers als Widerlager für diesen Stauchvorgang vorzusehen.

In bevorzugter Ausführungsform dieser Verfahrensvariante wird das Schlauchteil beim Abziehen vom Hohlstabende und insbesondere beim nachfolgenden längsaxialen Stauchen von außen abgestützt, z.B. durch einen rohrförmigen Körper, dessen Innendurchmesser dem Durchmesser des durch die Stauchung gebildeten Pfropfens entspricht. Dieser Innendurchmesser darf somit den Innendurchmesser des Hohlstabs nur wenig überschreiten, damit der resultierende Pfropfen keinen zu großen Durchmesser erhält, sondern im folgenden Schritt in den Hohlstabhohlraum mit nicht allzu hohem Kraftaufwand eingeführt werden kann.

Während des Einführens des gefälteten Schlauchteils in den Hohlstabhohlraum wird vom zu verschließenden Hohlstabende ein Teil der noch in geraffter Form vorliegenden Schlauchhülle in Richtung in den Hohlstabhohlraum entrafft und dabei gleichzeitig gewendet. Dieser entraffte Schlauchteil legt sich preßeng zwischen den durch längsaxiale Stauchung unregelmäßig gefälteten zentralen Schlauchteil und die Innenseite des Hohlstabes.

In beiden Verfahrensvarianten kann sich an die Herstellung des eigentlichen Verschlußelements eine zusätzliche Formung des offenen Endes des zentralen Schlauchteils anschließen. Im einfachsten Fall wird dieses Ende nach Herstellung des Verschlußelements losgelassen und liegt dann gewöhnlich in flachgelegter Form vor. Es kann aber auch quer zur Hohlstablängsachse umgelegt und gefalzt werden, oder es kann um einen Winkel von beispielsweise 90° bis 270° um die Hohlstablängsachse verdrillt werden. Die Form des offenen Endes des zentralen Schlauchteils ist frei wählbar und hat keinen wesentlichen Einfluß auf die eigentliche Wirkung des Verschlußelements.

Ein weiterer Gegenstand der vorliegenden Erfindung ist eine Vorrichtung zur Durchführung des Verfahrens, mit der der erfindungsgemäße mit einem Verschlußelement versehene Hohlstab hergestellt werden kann.

Die Vorrichtung ist relativ einfach aufgebaut und umfaßt als wesentliches Vorrichtungsteil ein Greifelement, welches in koaxialer Richtung mit der Längsachse des Hohlstabs verschiebbar ist. Mit dieser Bewegung des Greifelements läßt sich der Hohlstab Problemlos mit einem einseitig angebrachten Endverschluß aus dem Hüllenmaterial versehen.

Das Greifelement ist bezüglich seiner Greiffunktion beliebig ausgebildet. Es kann z.B. ein flachgelegtes Stück der Hülle am Hohlstabende durch Klemmen von außen erfassen oder aber durch Spreizen gegen die Innenseite des Hohlstabendes Hüllenmaterial festhalten und vom Hohlstab abziehen sowie entraffen. Das Festhalten erfolgt zwar üblicherweise mechanisch, doch kann es auch durch Ansaugen erfolgen.

Sofern das entraffte Schlauchteil außerhalb des Hohlstabs gestaucht werden soll, ist es außerdem zweckmäßig, wie bereits oben beschrieben, ein zum äußeren Abstützen des entrafften Schlauchteils während des Stauchens außerhalb des Hohlstabs geeignetes Element, z.B. einen rohr- oder hülsenförmigen Körper, vorzusehen, an welchem sich das entraffte Schlauchteil beim Stauchen abstützen kann. Der Innendurchmesser dieses zylindrischen Hohlkörpers muß auf den inneren Durchmesser des Hohlstabs abgestimmt sein. Er hat vor allem Stützfunktion bei der Formung des entrafften Schlauchteils zu einem Pfropfen außerhalb des Hohlstabs. Hierbei ist es nicht erfindungswesentlich, aus welchem Material dieses Element besteht, sofern es eine ausreichende Festigkeit besitzt.

Im Inneren dieses abstützenden Elementes ist das Greifelement längsaxial in beiden Richtungen beweglich, was beispielsweise mit einer Stellstange bewirkt werden kann, welche z.B. aus Metall besteht und eine ausreichende Länge besitzt, um das Greifelement in die gewünschten Arbeitspositionen führen zu können.

Bei der Herstellung des Verschlußelements nach der Verfahrensvariante, bei der ein Schlauchteil vom Hohlstabende unter Entraffen direkt in den Hohlstabhohlraum gezogen wird, wird zweckmäßigerweise das in den Hohlstabhohlraum gezogene Schlauchteil von innen durch ein Element abgestützt, welches dieses Schlauchteil auf einen Querschnitt aufweitet, der ausreicht, um das Greifelement innerhalb dieses Schlauchteils in längsaxialer Richtung frei bewegen zu können. Dieses Element bildet somit einen Kanal für das Greifelement und ist beispielsweise ein rohrförmiger Hohlzylinder.

Außerdem ist zur Durchführung dieser Verfahrensvariante ein Anschlagelement an dem zu verschließenden Hohlstabende vorhanden, welches als Widerlager dient, wenn das an der Hohlstabinnenseite anliegende Schlauchteil beim Herausziehen des Greifelements aus dem Hohlstabhohlraum unregelmäßig gefältelt werden soll. Als solches Anschlagelement kann beispielsweise das Ende des den Kanal für das Greifelement bildenden rohrförmigen Hohlzylinders ausgebildet sein. Das Anschlagelement kann auch als selbständige Einheit in den Zwischenraum zwischen Hohlstabende und dem Ende dieses rohrförmigen Hohlzylinders eingebracht werden, welcher durch das Entraffen des Hüllenmaterials am Hohlstabende entstanden ist, oder beweglich auf dem Umfang dieses rohrförmigen Hohlzylinders angeordnet sein.

Die Erfindung wird durch die Figuren 1 bis 7 näher erläutert. Es zeigt

Fig. 1 einen Hohlstab schematisch in Seitenansicht und teilweise im Schnitt,

Fig. 2 eine Ausführungsform des Hohlstabes in Seitenansicht und teilweise im Schnitt mit aufgeschnittenem Verschlußelement,

Fig. 3 eine bevorzugte Ausführungsform des Hohlstabes in Seitenansicht und teilweise im Schnitt mit aufgeschnittenem Verschlußelement,

Fig. 4a bis 4d vier Ausführungsformen des offenen Endes des den Endverschluß bildenden Schlauchstückes,

Fig. 5a und 5c zwei Ausbildungen des Hohlstabes der Fig. 2,

Fig. 5b und 5d zwei Ausbildungen des Hohlstabes der Fig. 3

Fig. 6a bis 6e schematisch den Verfahrensablauf und die Vorrichtung zur Herstellung des Hohlstabes nach Fig. 2,

Fig. 7a bis 7f schematisch den Verfahrensablauf und die Vorrichtung zur Herstellung des Hohlstabes nach Fig. 3.

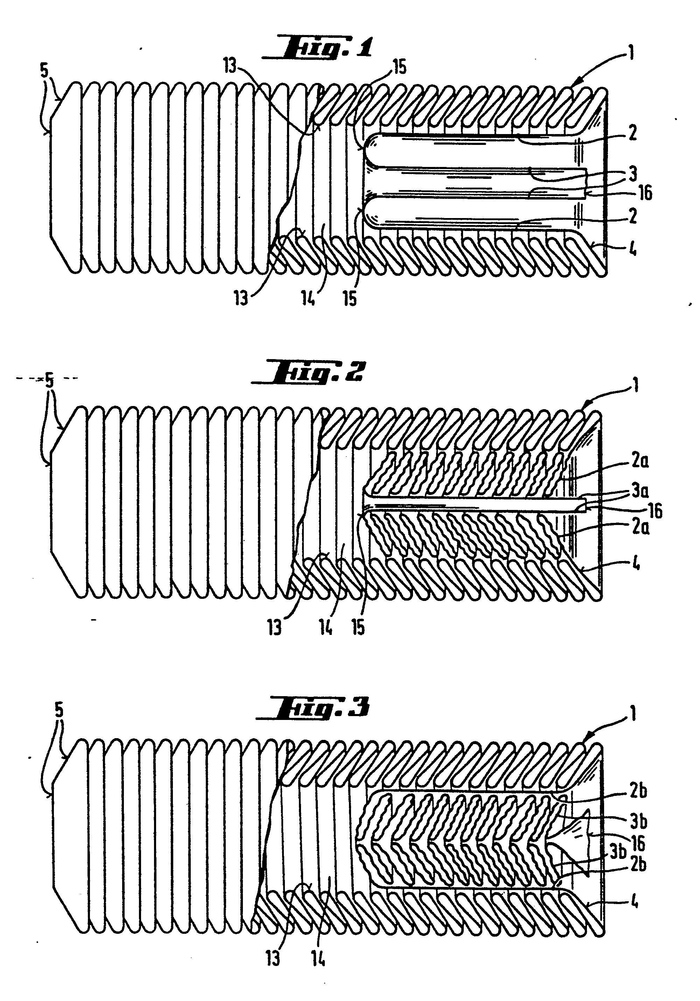

In Fig. 1 ist der Hohlstab 1 mit einem Verschlußelement, gebildet aus einem äußeren Schlauchteil 2 und einem zentralen, inneren Schlauchteil 3, versehen. Das Verschlußelement befindet sich am hohlkonischen Ende 4 des Hohlstabes 1. Das Ende 4 bildet eine kegelstumpfartige Stirnfläche, welche in Richtung zum Hohlstabhohlraum 14 geneigt ist. Das gegenüberliegende Ende 5 des Hohlstabs 1 ist nicht verschlossen. Mit 13 ist die Innenseite des Hohlstabs 1 bezeichnet.

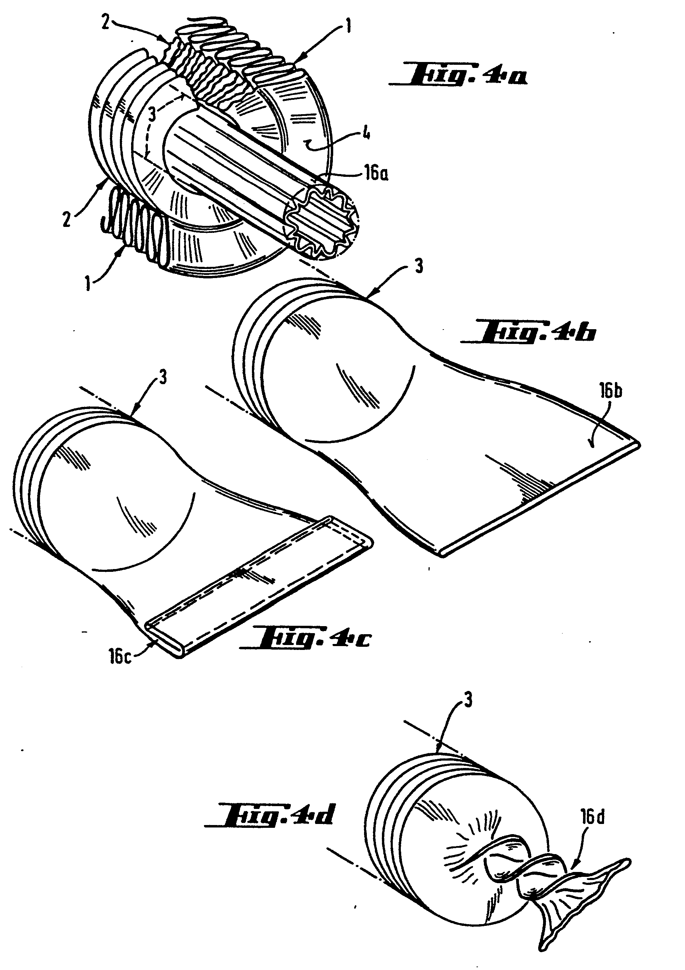

In Fig. 2 besteht das Verschlußelement im Hohlraum 14 des Hohlstabs 1 aus einem unregelmäßig gefältelten Schlauchteil 2a, welches an der Innenseite 13 des Hohlstabs anliegt. Das andere entraffte Schlauchteil 3a ist koaxial in dem Schlauchteil 2a angeordnet und wird von diesem umgeben. Im Bereich 15 geht das zentrale Schlauchteil 3a unter Umbiegung in Richtung zur Innenseite 13 des Hohlstabs 1 und dann in Richtung zum Ende 4 des Hohlstabs 1 integral in das Schlauchteil 2a über. Das Schlauchteil 2a geht am gegenüberliegenden Ende integral in den Hohlstab 1 über. Mit 16 ist das offene Ende des den Endverschluß bildenden Schlauchstücks bezeichnet, welches sich zentral im Hohlstabhohlraum 14 befindet.

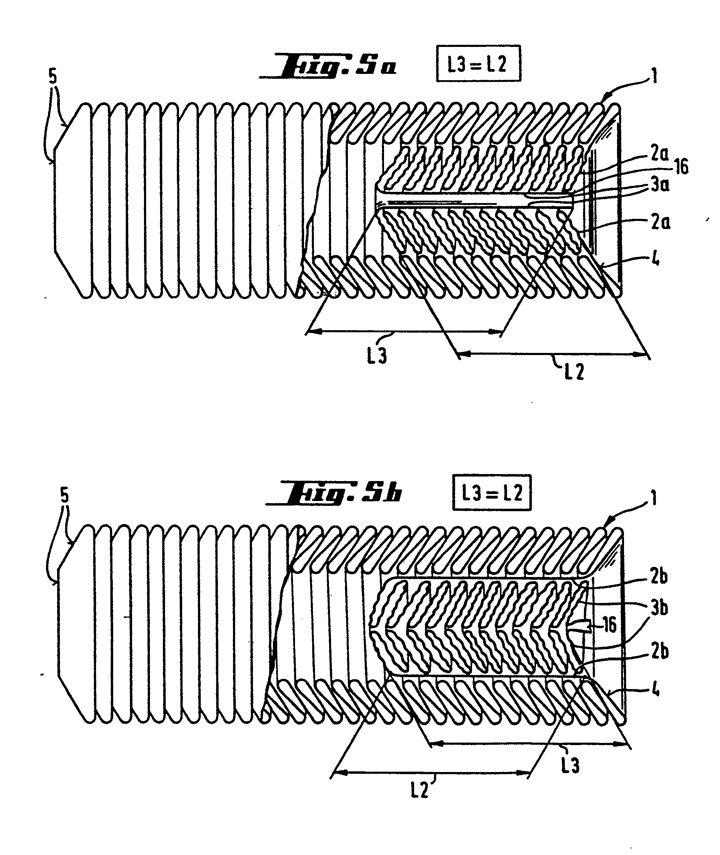

In Fig. 3 grenzt das äußere entraffte Schlauchteil 2b an die Innenseite 13 des Hohlstabs 1 an und umgibt das innere unregelmäßig gefältelte Schlauchteil 3b.

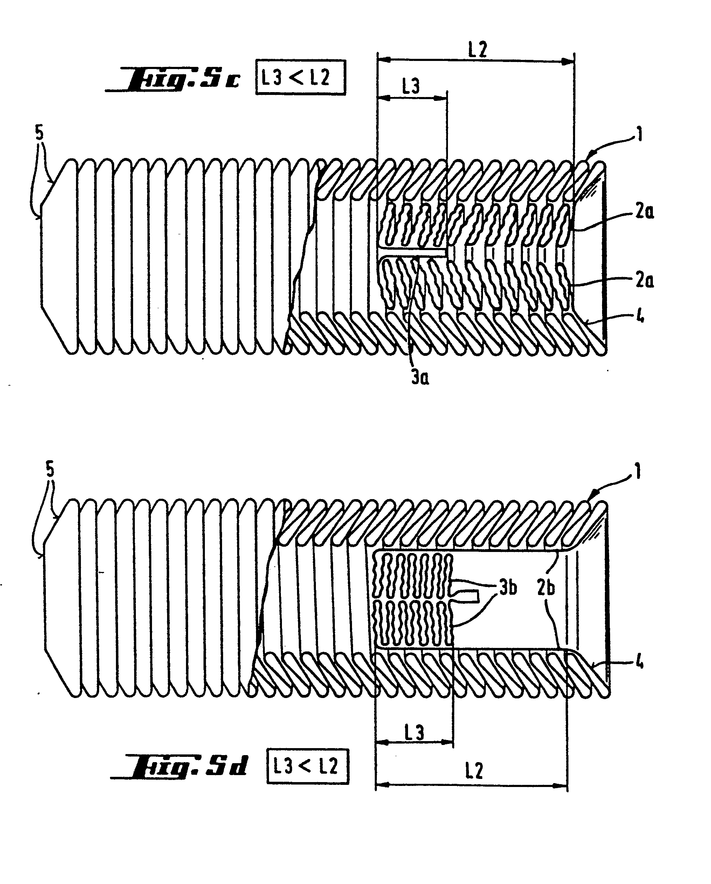

Fig. 4a bis 4d zeigen verschiedene Ausführungsformen des offenen Endes 16 des inneren Schlauchteils 3, wobei das Ende 16a in Figur 4a rund, das Ende 16b in Figur 4b flachgelegt, das Ende 16c in Figur 4c gefalzt und das Ende 16d in Figur 4d verdrillt ist.

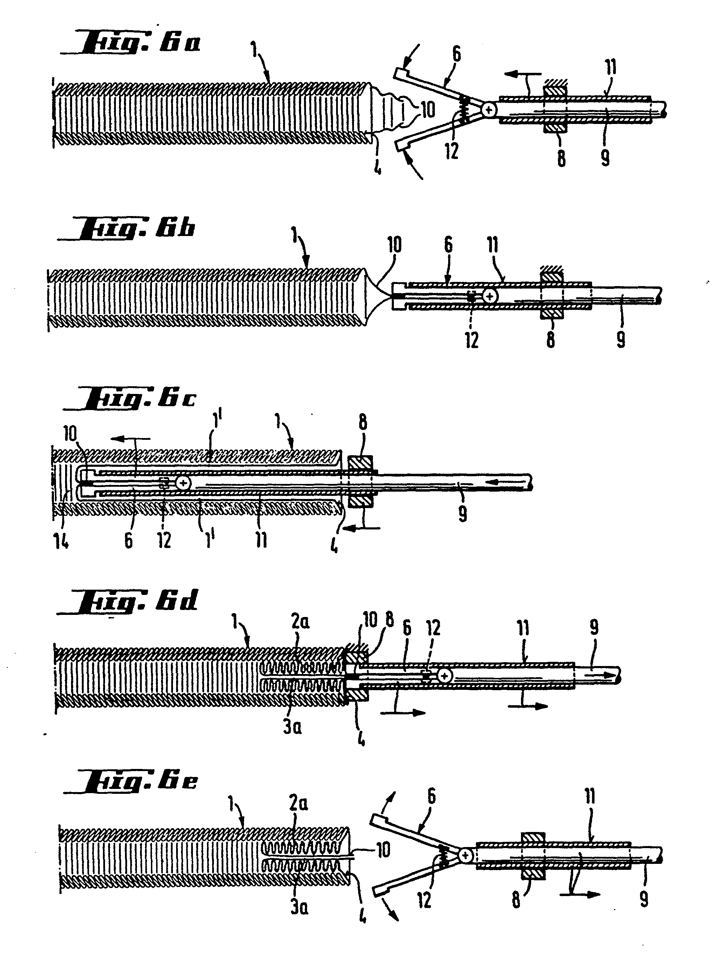

Fig. 5a bis 5d zeigen verschiedene Ausführungsformen des Verschlußelements, wobei in Figur 5a das zentrale Schlauchteil 3a entrafft und genauso lang (L3) wie das äußere Schlauchteil 2a (L2) ist. In Figur 5b ist das zentrale Schlauchteil 3b gekräuselt und auch genauso lang (L3) wie das entraffte, äußere Schlauchteil 2b (L2). In Fig. 5c ist das zentrale Schlauchteil 3a entrafft und kürzer (L3) als das äußere, gekräuselte Schlauchteil 2a (L2). In Figur 5d ist das innere Schlauchteil 3b gekräuselt und kürzer (L3) als das äußere, entraffte Schlauchteil 2b (L2).

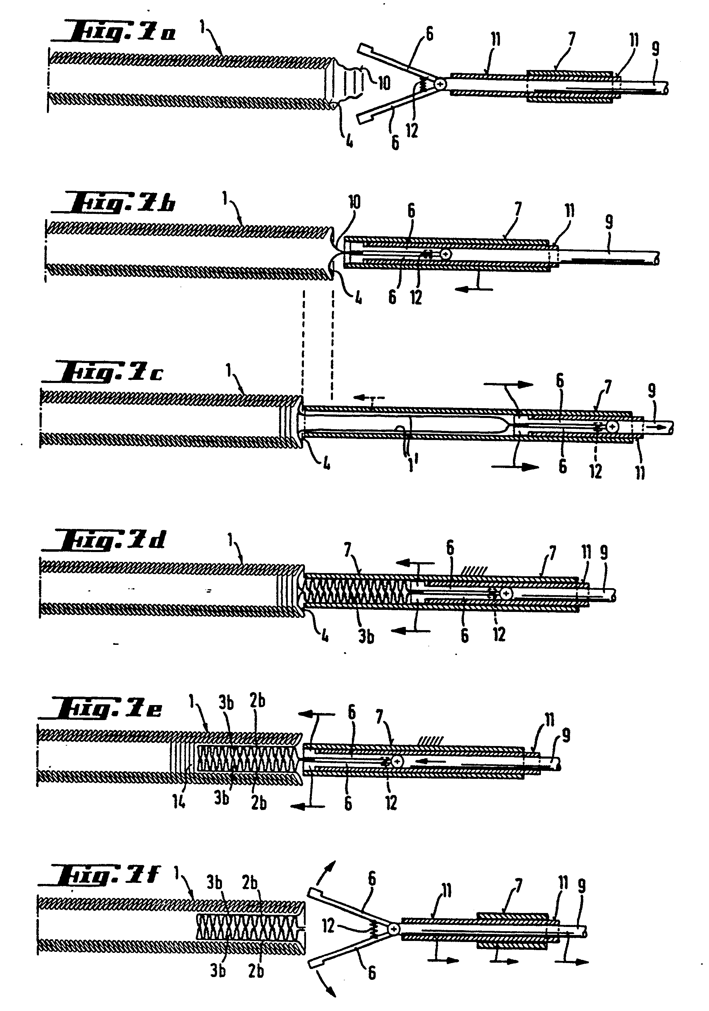

Aus Gründen der Übersichtlichkeit sind die üblichen Lager- und Halteelemente sowie Antriebs- und Steuerelemente in den Fig. 6a bis 6e und 7a bis 7f nicht dargestellt. Fig. 6a zeigt das durch das Federorgan 12 offen gehaltene Greifelement 6, welches sich über dem Endstück 10 der Schlauchhülle am hohlkonischen Ende 4 des Hohlstabes 1 befindet und mit der Stellstange 9 längsaxial verschiebbar ist. Die Stellstange 9 wird innerhalb des Hohlzylinders 11 geführt, welcher selbst längsaxial verschoben werden kann. In Fig. 6b ist der Hohlzylinder 11 in Richtung auf den Hohlstab 1 längsaxial verschoben, wodurch das Greifelement 6 die Schlauchhülle 10 erfaßt. In Fig. 6c wird das Greifelement 6, welches die Schlauchhülle 10 erfaßt hält, mit Hilfe der Stellstange 9 in den Hohlraum 14 des Hohlstabes 1 bewegt (Pfeil), wobei ein Teil der den Hohlstab 1 bildenden, in geraffter Form vorliegenden Schlauchhülle 1' entrafft wird. Der Hohlzylinder 11 wird ebenfalls in den Hohlstabhohlraum 14 eingeführt. In Fig. 6d wird das Greifelement 6 von der Stellstange 9 längsaxial in die Gegenrichtung bewegt, also wieder dem hohlkonischen Hohlstabende 4 entgegen (Pfeil), wobei das entraffte Hüllenmaterial 1' gegen den nun feststehenden Anschlag 8 zu einem stopfenförmigen Verschlußelement gekräuselt wird. In dieser Fertigungsstufe ist bereits das gekräuselte, äußere Schlauchteil 2a und das entraffte, innere Schlauchteil 3a zu erkennen. In Figur 6e ist das Greifelement 6 vom Hüllenende des entrafften, zentralen Schlauchteils 3a losgelöst, und das äußere Schlauchteil 2a liegt in gekräuselter Form vor. Das Öffnen des Greifelementes 6 kann selbsttätig durch das Federorgan 12 erfolgen, wenn der Hohlzylinder 11 von dem Greifelement 6 abgezogen wird.

In Fig. 7a ist das durch das Federorgan 12 offen gehaltene, von außen angreifende Greifelement 6 dargestellt, welches sich über dem Endstück 10 der Schlauchhülle am hohlkonischen Ende 4 des Hohlstabes 1 befindet und mit der Stellstange 9 längsaxial verschiebbar ist. Die Stellstange 9 wird innerhalb des Hohlzylinders 11 geführt, welcher selbst längsaxial verschoben werden kann. Die Funktion des zylindrischen Hohlkörpers 7 wird in Fig. 7c und 7d erläutert. In Fig. 7b hat das Greifelement 6 die Schlauchhülle 10 erfaßt und zieht sie in Fig. 7c mit Hilfe der Stellstange 9 unter weiterem Entraffen in den zylindrischen Hohlkörper 7, der bis zum Ende 4 des Hohlstabes 1 herangeführt wurde (Pfeil in Fig. 7b). Das entraffte Hüllenmaterial ist mit 1' bezeichnet. In Fig. 7d hat die Stellstange 9 das Greifelement 6 in gegenläufiger längsaxialer Richtung auf das hohlkonische Hohlstabende 4 hin bewegt (Pfeil), wobei das entraffte Hüllenmaterial 1' in dem durch den zylindrischen Hohlkörper 7 gebildeten Rundkanal gestaucht und unregelmäßig gefältelt wurde. Das Ende 4 des Hohlstabs 1 dient beim Stauchen als Widerlager. In Fig. 7e ist das im zylindrischen Hohlkörper 7 vorgebildete gekräuselte Schlauchteil 3b weiter in den Hohlraum 14 des Hohlstabes 1 hineingeschoben worden und bildet jetzt das zentrale Schlauchteil 3b, während ein äußeres Schlauchteil 2b in entraffter Form vorliegt. In Fig. 7f hat das Greifelement 6 das erfaßte Hüllenende durch Zurückfahren des Hohlkörpers 7 losgelassen, und das fertig ausgebildete pfropfenartige Verschlußelement, bestehend aus dem äußeren entrafften Schlauchteil 2b und dem inneren gekräuselten Schlauchteil 3b, ist zu erkennen.

Der besondere Vorteil der vorliegenden Erfindung ist in der Tatsache zu sehen, dan das Verschlußelement nur durch längsaxiale Bewegungen hergestellt wird und sich somit als besonders geeignet für automatisierte Herstellungsverfahren erweist. Das Verschlußelement läßt sich in alle in der Praxis verwendeten Hohlstäbe einsetzen, insbesondere bei Hohlstäben aus Wursthüllen von kleinem Kaliber wie sie zur Herstellung von hautlosen Würstchen z.B. auf Füllautomaten eingesetzt werden.

## Patentansprüche

1. Einseitig verschlossener, aus geraffter schlauchförmiger Hülle bestehender zylindrischer Hohlstab (1) mit einem innerhalb seines Hohlraums (14) angeordneten, an seiner Innenseite (13) angrenzenden, ein unregelmäßig gefälteltes, in Richtung der Längsachse des Hohlstabs zusammengepreßtes Schlauchteil umfassenden, integralen pfropfenartigen Verschlußelement, dadurch gekennzeichnet, daß das Verschlußelement aus einem im wesentlichen zylinderförmigen im Hohlraum (14) des Hohlstabs (1) koaxial angeordneten Pfropfen besteht, der aus einem im wesentlichen glatten Schlauchteil (2b, 3a) und einem unregelmäßig gefältelten zusammengepreßten Schlauchteil (2a, 3b) besteht, daß ferner das eine Schlauchteil (2), vorzugsweise das im wesentlichen glatte Schlauchteil (2b), an der Innenseite (13) des Hohlstabs (1) anliegt und das andere Schlauchteil (3) von dem einen Schlauchteil (2) umgeben wird, wobei das eine Schlauchteil (2) an seinem einen Ende (15), welches dem unverschlossenen Ende (5) des Hohlstabs (1) zugewandt ist, unter Umbiegung um 180° integral in das andere Schlauchteil (3) und im Bereich seines anderen Endes integral in den Hohlstab (1) übergeht.

2. Hohlstab nach Anspruch 1, dadurch gekennzeichnet, daß der Hohlstab (1) an seinen Enden (4, 5) kegelstumpfförmige Stirnflächen aufweist und das Verschlußelement sich an dem Ende (4) des Hohlstabes (1) befindet, dessen Stirnfläche vom Außenumfang des Hohlstabs (1) trichterförmig in den Hohlstabhohlraum (14) hinein geneigt ist.

3. Verfahren zur Herstellung des Hohlstabs nach Anspruch 1 oder 2, bei dem ein Schlauchstück (1') an dem zu verschliessenden Ende (4) des Hohlstabs (1) entrafft wird und das entraffte Schlauchstück (1') durch Stauchen in Richtung der Längsachse des Hohlstabs zu einem pfropfenartigen unregelmäßig gefältelten Verschlußelement verformt wird, gekennzeichnet durch

(a) daß zunächst das Schlauchstück (1') an dem zu verschliessenden Ende (4) des Hohlstabs (1) in längsaxialer Richtung vom Hohlstab (1) weggezogen und dabei entrafft wird,

(b) daß danach dieses entraffte Schlauchstück (1') außerhalb des Hohlstabs (1) in entgegengesetzter Richtung zum Schritt (a) unter Bildung eines unregelmäßig gefältelten Schlauchteils (3b) von im wesentlichen zylindrischer Form gestaucht wird, wobei sein Durchmesser praktisch dem Durchmesser des Hohlstabhohlraums (14) entspricht,

(c) daß anschließend das nun unregelmäßig gefältelte Schlauchteil (3b) in den Hohlstabhohlraum (14) eingeführt wird und daß dabei gleichzeitig ein weiteres Schlauchteil (2b) von dem besagten Ende des Hohlstabs unter Entraffen und Umstülpen in den Hohlstabhohlraum (14) gebracht wird, wobei dieses im wesentlichen glatte Schlauchteil (2b) einerseits an der Hohlstabinnenseite (13) anliegt und andererseits den unregelmäßig gefältelten Schlauchteil (3b) umgibt.

4. Verfahren nach Anspruch 3, dadurch gekennzeichnet, daß man das zu entraffende Schlauchstück während des Entrraffens beim Schritt (a), insbesondere aber das entraffte Schlauchstück (1') während des Stauchens beim Schritt (b), von außen abstützt.

5. Verfahren zur Herstellung des Hohlstabs nach Anspruch 1 oder 2, bei dem ein Schlauchstück (1') an dem zu verschließenden Ende (4) des Hohlstabs (1) entrafft wird und das entraffte Schlauchstück (1') im Hohlstabhohlraum (14) unter Bewegung in Richtung auf das zu verschließende Hohlstabende (4) zu einem pfropfenartigen, unregelmäßig gefältelten Verschlußelement verformt wird, gekennzeichnet durch

(a) daß zunächst das entraffte Schlauchstück (1') unter Entraffen und Umstülpen vom zu verschließenden Ende (4) in den Innenraum des Hohlstabs hinein abgezogen wird,

(b) daß das entraffte Schlauchstück (1') an seinem im hohlstabhohlraum befindlichen Ende erfaßt wird und unter erneuter Umstülpung durch den Hohlraum des entrafften Schlauchstücks (1') in Richtung zu dem zu verschließenden Ende (4) des Hohlstabs zurückgezogen wird, und daß dabei gleichzeitig das sich von dem Hohlstabende (4) in den Hohlstabhohlraum (14) erstreckende entraffte Schlauchstück (1') in Richtung auf das Hohlstabende (4) unter Bildung eines unregelmäßig gefältelten Schlauchteils (2a) von im wesentlichen zylindrischer, pfropfenartiger Form gestaucht wird, welches gefältelte Schlauchteil außen an der Hohlstabinnenseite (13) anliegt und nach innen einen im wesentlichen glatten Schlauchteil (3a) des Schlauchstücks (1') umgibt.

6. Verfahren nach Anspruch 5, dadurch gekennzeichnet, daß man das zu entraffende Schlauchstück (1') während des Entraffens beim Schritt (a), insbesondere aber das entraffte, in den Hohlstabhohlraum hineingezogene äußere Schlauchstück (1') während des Zurückziehens des entrafften inneren Schlauchstücks spreizt.

7. Vorrichtung zur Durchführung des Verfahrens nach Anspruch 3 oder 5, umfassend ein Element zum Wegziehen und gleichzeitigem Entraffen eines Schlauchstücks (1') vom zu verschließenden Ende (4) eines Hohlstabes (1), dadurch gekennzeichnet, daß dieses Element ein Greifelement (6) ist, welches koaxial mit der Längsachse des Hohlstabes (1) zum Stauchen des Schlauchstücks (1') verschiebbar ist und in der einen Verschiebungsrichtung die Entraffung des Schlauchstücks (1') und in der entgegengesetzten Verschiebungsrichtung die Stauchung und Kräuselung eines Teils desselben bewirkt.

8. Vorrichtung nach Anspruch 7, gekennzeichnet durch ein Element in Form eines zylindrischen Hohlkörpers (7) und geeignet zum äußeren Abstützen des entrafften Schlauchstücks (1') beim Stauchen, welches Element sich außerhalb des Hohlstabes (1) befindet und unmittelbar vor dem zu verschließenden Ende (4) des Hohlstabes (1) endet sowie in welchem das Greifelement (6) verschiebbar angeordnet ist, wobei der Innendurchmesser des zylindrischen Hohlkörpers (7) im wesentlichen dem Außendurchmesser des herzustellenden Verschlußelements entspricht.

9. Vorrichtung nach Anspruch 8, gekennzeichnet durch ein Anschlagelement, welches sich an dem zu verschliessenden Ende (4) und außerhalb des Hohlstabes (1) befindet, gegen welches das außerhalb des Hohlstabes (1) entraffte Schlauchstück (1') gestaucht wird.

10. Vorrichtung nach Anspruch 7, gekennzeichnet durch ein Element in Form eines Hohlzylinders (11) und geeignet zum inneren Abstützen des entrafften Schlauchstücks im Hohlstabhohlraum (14), welches sich zumindest teilweise im Hohlstabhohlraum (14) befindet und in welchem das Greifelement (6) verschiebbar angeordnet ist.

11. Vorrichtung nach Anspruch 10, gekennzeichnet durch ein Anschlagelement (8), welches sich an dem zu verschließenden Ende (4) des Hohlstabes (1) befindet, gegen welches das im Hohlstabhohlraum (14) entraffte Schlauchstück (1') gestaucht wird.

**Claims**

1. A cylindrically-shaped hollow rod (1) which is closed at one end and comprised of a shirred tubular casing and which includes in its cavity (14) an integral, plug-type closure element which is adjacent to the inside wall (13) of the hollow rod and comprises an irregularly folded tubing section, compressed in the direction of the longitudinal axis of the hollow rod wherein said closure element is constituted by an essentially cylindrically-shaped plug which is coaxially arranged in the cavity (14) of the hollow rod (1) and composed of an essentially unfolded tubing portion (2b, 3a) and of an irregularly folded, compressed tubing portion (2a, 3b), and wherein furthermore one of the tubing portions (2), preferably the essentially unfolded tubing portion (2b), is adjacent to the inside wall (13) of the hollow rod (1), and the other tubing portion (3) is surrounded by the first tubing portion (2), whereby one end (15) of the first tubing portion (2), which points in the direction of the open end (5) of the hollow rod (1) is bent back about an angle of 180° and thus integrally changes into the other tubing portion (3), while the other end of the first tubing portion (2) integrally changes into the hollow rod (1).

2. Hollow rod as claimed in Claim 1, wherein the ends (4, 5) of the hollow rod (1) possess conical front surfaces and the closure element is located at that end (4) of the hollow rod where the front surface is inclined from the outer circumference of the hollow rod (1) towards the cavity (14) of the hollow rod (1), like a funnel.

3. Process for the production of the hollow rod as claimed in Claim 1 or 2, in which, at the end (4) to be closed of the hollow rod (1), a tubing portion (1') is deshirred, and the deshirred tubing portion (1') is formed into a plug-type, irregularly folded closure element, by compression in the direction of the longitudinal axis of the hollow rod, wherein

a) first the tubing portion (1') is withdrawn from the end (4) of the hollow rod (1) to be closed, in the direction of the longitudinal axis, and thereby deshirred,

b) then this deshirred tubing portion (1') is compressed in the direction opposite to the direction of step a), so that an irregularly folded tubing portion (3b) having an essentially cylindrical shape is obtained, the diameter of which practically corresponds to the diameter of the cavity (14) of the hollow rod (1), and

c) subsequently the irregularly folded tubing portion (3b) is introduced into the cavity (14) of the hollow rod (1), whereby another tubing portion (2b) is simultaneously introduced into the cavity (14) of hollow rod (1) while being deshirred and turned back, this essentially unfolded tubing portion (2b) being adjacent to the inside wall (13) of the hollow rod (1) and at the same time surrounding the irregularly folded tubing portion (3b).

4. Process as claimed in Claim 3, wherein the tubing portion to be deshirred is supported from outside during the deshirring in a step a), and, in particular, the deshirred tubing portion (1') is supported from outside during the compression in step b).

5. Process for the production of the hollow rod as claimed in Claim 1 or 2, in which, at the end (4) to be closed of the hollow rod (1), a tubing portion (1') is deshirred, and the deshirred tubing portion (1') is formed into a plug-type, irregularly folded closure element in the cavity (14) of the hollow rod (1), while being moved in the direction of the end (4) to be closed of the hollow rod, wherein

a) first the tubing portion (1') is withdrawn from the end (4) to be closed of the hollow rod and thereby deshirred and simultaneously turned back and introduced into the cavity (14) of the hollow rod,

b) the deshirred tubing portion (1') is gripped by its end, which is located in the cavity (14) of the hollow rod, and is turned back again and drawn in the direction of the end (4) to be closed of the hollow rod, through the cavity of the deshirred tubing portion (1'), whereby the deshirred tubing portion (1'), extending from the end (4) to be closed of the hollow rod (1) into the cavity (14) of the hollow rod (1), is simultaneously compressed in the direction of the end (4) of the hollow rod (1), so that an irregularly folded tubing portion (2a) having an essentially cylindrical, plug-type shape is obtained, the outer side of said folded tubing portion being adjacent to the inside wall (13) of the hollow rod (1) and its inner side surrounding an essentially unfolded tubing portion (3a) of the tubing portion (1').

6. Process as claimed in Claim 5, wherein the tubing portion (1') to be deshirred is expanded during the deshirring in step (a) and, in particular, the deshirred outer tubing portion (1'), which has been drawn into the cavity of the hollow rod, is spread during the drawing-back of the deshirred inner tubing portion.

7. Device for carrying out the process as claimed in Claim 3 or 5, comprising an element for drawing off and simultaneously deshirring a tubing portion (1') from the end to be closed (4) of a hollow rod (1), which is a gripping element (6) which can be shifted coaxially in the direction of the longitudinal axis of the hollow rod (1) for compressing the tubing portion (1') and which, when being shifted in one direction, effects deshirring of the tubing portion (1') and, when being shifted in the opposite direction, effects compression and folding of a part of the tubing portion (1').

8. Device as claimed in Claim 7 which comprises an element, in the form of a cylindrical hollow body (7), which is suitable for supporting the deshirred tubing portion (1') from outside during the compression and is arranged outside the hollow rod (1) and ends directly in front of the end (4) of the hollow rod (1) to be closed, and in which the gripping element (6) is movably arranged, whereby the internal diameter of the cylindrical hollow body (7) essentially corresponds to the external diameter of the closure element to be produced.

9. Device as claimed in Claim 8, which comprises a stop member, which is located outside the hollow rod (1), at the end (4) to be closed, and against which the tubing portion (1') which has been deshirred outside the hollow rod (1), is compressed.

10. Device as claimed in Claim 7, which comprises an element in the form of a hollow cylinder (11) suitable for internally supporting the deshirred tubing portion in the cavity (14) of the hollow rod (1), and at least part of which is situated in the cavity (14) of the hollow rod (1), and in which the gripping element (6), is movably arranged.

11. Device as claimed in Claim 10, which comprises a stop member (8) which is located at the end (4) to be closed of the hollow rod (1) and against which the tubing portion (1'), which has been deshirred in the cavity (14) of the hollow rod (1), is compressed.

## Revendications

1. Tige creuse (1) cylindrique, obturée d'un côté et constituée d'une enveloppe en forme de tube souple et plissée, comportant un élément d'obturation en forme de bouchon et venu de matière, disposé à l'intérieur de sa cavité (14), adjacent à sa face intérieure (13) et comprenant une partie de tube souple pliée de manière irrégulière et comprimée suivant la direction de l'axe longitudinal de la tige creuse, caractérisée en ce que l'élément d'obturation est constitué d'un bouchon de forme essentiellement cylindrique et disposé de manière coaxiale dans la cavité (14) de la tige creuse (1) et qui consiste en une partie de tube souple (2b, 3a) essentiellement lisse et une partie de tube souple (2a, 3b) écrasée et pliée de manière irrégulière, en ce qu'en outre l'une des parties de tube souple (2), de préférence la partie de tube souple (2b) essentiellement lisse s'appuie sur la face intérieure (13) de la tige creuse (1) et l'autre partie de tube souple (3) est entourée par la première partie de tube souple (2), tandis que, à l'une de ses extrémités (15), qui est tournée vers l'extrémité non obturée (5) de la tige creuse (1), cette première partie de tube souple (2) se raccorde, venue de matière, à l'autre partie de tube souple (3), par pliage à 180°, en se raccordant, dans la zone de son autre extrémité, à la tige creuse (1) en étant venue de matière avec elle.

2. Tige creuse selon la revendication 1, caractérisée en ce que cette tige creuse (1) présente à ses extrémités (4, 5) des surfaces frontales en forme de tronc de cône et l'élément d'obturation se trouve situé à l'extrémité (4) de cette tige creuse (1) dont la surface frontale est inclinée, à partir de la périphérie extérieure de la tige creuse (1), en pénétrant en forme d'entonnoir dans la cavité de tige creuse (14).

3. Procédé de fabrication de la tige creuse selon la revendication 1 ou 2, selon lequel on déplisse un tronçon de tube souple (1') à l'extrémité à obturer (4) de la tige creuse (1) et on déforme le tronçon de tube souple (1') déplissé par écrasement suivant la direction de l'axe longitudinal de la tige creuse, pour donner un élément d'obturation en forme de bouchon et plié de manière irrégulière, caractérisé en ce que

(a) on tire tout d'abord le tronçon de tube souple (1') se trouvant à l'extrémité à obturer (4) de la tige creuse (1), suivant la direction axiale longitudinale et dans le sens l'éloignant de cette tige creuse (1), ce tronçon se trouvant de ce fait déplissé,

(b) on écrase ensuite ce tronçon déplissé de tube souple (1') à l'extérieur de la tige creuse (1) et dans la direction opposée à l'étape (a), avec formation d'une partie de tube souple (3b) pliée de manière irrégulière et de forme essentiellement cylindrique, son diamètre correspondant pratiquement au diamètre de la cavité de tige creuse (14),

(c) on introduit par la suite dans la cavité de tige creuse (14) la partie de tube souple (3b) maintenant pliée de manière irrégulière et on amène alors simultanément dans cette cavité de tige creuse (14) une partie supplémentaire de tube souple (2b) provenant de l'extrémité indiquée de la tige creuse, ceci avec déplissage et retroussement, cette partie de tube souple (2b) essentiellement lisse s'appuyant d'une part sur la face intérieure (13) de la tige creuse et entourant d'autre part la partie de tube souple (3b) pliée de manière irrégulière.

4. Procédé selon la revendication 3, caractérisé en ce qu'on soutient de l'extérieur le tronçon de tube souple à déplisser, pendant le déplissage effectué lors de l'étape (a), mais notamment par contre le tronçon déplissé de tube souple (1') pendant l'écrasement réalisé lors de l'étape (b).

5. Procédé de fabrication de la tige creuse selon la revendication 1 ou 2, selon lequel on déplisse un tronçon de tube souple (1') se trouvant à l'extrémité à obturer (4) de la tige creuse (1) et on déforme le tronçon déplissé de tube souple (1') dans la cavité (14) de la tige creuse, par déplacement en direction de l'extrémité à obturer (4) de cette tige creuse, pour donner un élément d'obturation en forme de bouchon et plié de manière irrégulière, caractérisé en ce que

(a) on tire tout d'abord, avec déplissage et retroussement, le tronçon déplissé de tube souple (1'), en direction de et dans la cavité intérieure de la tige creuse et à partir de l'extrémité à obturer (4),

(b) on saisit le tronçon déplissé de tube souple (1') à son extrémité se trouvant dans la cavité de la tige creuse et, par nouveau retroussement, on le tire en sens inverse, à travers la cavité du tronçon déplissé de tube souple (1') et en direction de l'extrémité à obturer (4) de la tige creuse, tandis qu'on comprime alors simultanément le tronçon déplissé de tube souple (1') qui s'étend dans la cavité de tige creuse (14) à partir de l'extrémité (4) de cette tige creuse, en direction de cette extrémité (4) de la tige creuse et avec formation d'un tronçon de tube souple (2a) plié de manière irrégulière et ayant une forme essentiellement cylindrique et en forme de bouchon, laquelle partie pliée de tube souple s'appuie à l'extérieur sur la face intérieure (13) de la tige creuse et entoure vers l'intérieur une partie de tube souple (3a) du tronçon de tube (1') qui est essentiellement lisse.

6. Procédé selon la revendication 5, caractérisé en ce que l'on évase le tronçon déplissé de tube souple (1') pendant le déplissage effectué lors de l'étape (a), mais par contre notamment le tronçon extérieur de tube souple (1') déplissé et tiré à l'intérieur de la cavité de tige creuse, pendant la traction en sens inverse du tronçon intérieur déplissé de tube souple.

7. Dispositif de mise en oeuvre du procédé selon la revendication 3 ou 5, comportant un élément permettant, à partir de l'extrémité à obturer (4) d'une tige creuse (1) l'extraction avec éloignement et le déplissage simultané d'un tronçon de tube souple (1'), caractérisé en ce que cet élément est un élément de préhension (6) qui peut être déplacé en translation de manière coaxiale à l'axe longitudinal de la tige creuse (1) en vue de l'écrasement du tronçon de tube souple (1') et qui réalise, dans l'une des directions de déplacement en translation, le déplissage du tronçon de tube souple (1') et, dans la direction opposée de déplacement en translation, l'écrasement et l'ondulation d'une partie du même tronçon.

8. Dispositif selon la revendication 7, caractérisé par un élément en forme de corps creux cylindrique (7) et adapté à supporter extérieurement le tronçon déplissé de tube souple (1') lors de l'écrasement, cet élément se trouvant situé à l'extérieur de la tige creuse (1) et se terminant immédiatement avant l'extrémité à obturer (4) de cette tige creuse (1), l'élément de préhension (6) étant également disposé de manière à pouvoir se déplacer en translation dans ledit élément, le diamètre intérieur du corps creux cylindrique (7) correspondant essentiellement au diamètre extérieur de l'élément d'obturation à fabriquer.

9. Dispositif selon la revendication 8, caractérisé par un élément de butée qui se trouve situé à l'extrémité (4) à obturer et à l'extérieur de la tige creuse (1), et contre lequel se trouve écrasé le tronçon de tube souple (1') déplissé à l'extérieur de la tige creuse (1).

10. Dispostif selon la revendication 7, caractérisé par un élément en forme de cylindre creux (11) et adapté à supporter intérieurement le tronçon déplissé de tube souple se trouvant dans la cavité (14) de la tige creuse, et qui se trouve situé au moins partiellement dans cette cavité de tige creuse (14) et dans lequel l'élément de préhension (6) se trouve disposé de manière à pouvoir se déplacer en translation.

11. Dispositif selon la revendication 10, caractérisé par un élément de butée (8) qui se trouve situé à l'extrémité à obturer (4) de la tige creuse (1) et contre lequel se trouve écrasé le tronçon de tube souple (1') qui se trouve à l'état déplissé dans la cavité (14) de la tige creuse.

*Fig. 1*

*Fig. 2*

*Fig. 3*

0 114 397

Fig. 4·a

Fig. 4·b

Fig. 4·c

Fig. 4·d

3

**Fig. 5a**  L3 = L2

5

1

2a
16
3a
2a
4

L3

L2

**Fig. 5b**  L3 = L2

5

1

2b
3b
16
2b
4

L3

L2

Fig. 5c  L3 < L2

Fig. 5d  L3 < L2

**Fig. 6 a**

**Fig. 6 b**

**Fig. 6 c**

**Fig. 6 d**

**Fig. 6 e**

Fig.7a

Fig.7b

Fig.7c

Fig.7d

Fig.7e

Fig.7f